# FASCICULE DE BREVET EUROPEEN

(11) **EP 0 782 339 B1**
(45) Date de publication et mention de la délivrance du brevet: **14.11.2001**
(21) Numéro de dépôt: 96402896.3
(22) Date de dépôt: 26.12.1996
(51) Int. Cl.: H04N 7/26

(54) **Procédé et dispositif de compression de données numériques**
Verfahren und Vorrichtung zur Kompression von digitalen Daten
Method and apparatus for compressing digital data

(30) Priorité: 29.12.1995 FR 9515743
(43) Date de publication de la demande: 02.07.1997
(73) Titulaire: THOMSON BROADCAST SYSTEMS, 95801 Cergy-Pontoise Cedex (FR)
(72) Inventeur: Guillotel, Philippe, 92050 Paris la Defense Cedex (FR); Mainard, Didier, 92050 Paris la Defense Cedex (FR)
(74) Mandataire: Ruellan-Lemonnier, Brigitte

(56) Documents cités:
- EP-A- 0 509 576
- EP-A- 0 711 079
- INTERNATIONAL SYMPOSIUM ON CIRCUITS AND SYSTEMS. (ISCAS) COMMUNICATION AND VISUAL SIGNAL PROCESSING (CVSP), LONDON, MAY 30 - JUNE 2, 1994, vol. 3 OF 6, 30 Mai 1994, INSTITUTE OF ELECTRICAL AND ELECTRONICS ENGINEERS, pages 201-204, XP000493266 SHIH-FU CHANG ET AL: "ERROR ACCUMULATION OF REPETITIVE IMAGE CODING"

## Description

L'invention concerne un procédé et un dispositif de compression de données numériques. Il s'agit plus particulièrement d'un codage de source de type non réversible, c'est-à-dire réalisant une compression du signal aux dépens d'une légère perte d'information, codage basé sur une quantification du signal.

C'est par exemple un codage par Transformation Cosinus Discrète (TCD) de données numériques vidéo suivi d'une quantification des coefficients transformés. Ce codage est exploité lors de la transmission et/ou le stockage des images et particulièrement en production. Il est ainsi utilisé afin de réduire le volume d'informations à stocker, que se soit dans les magnétoscopes ou dans des mémoires de masse.

Dans un studio, les images sont lues et enregistrées, c'est-à-dire décodées et codées de multiples fois avant d'obtenir le résultat final, entre 5 et 10 fois en moyenne mais il n'est plus rare que des films nécessitent jusqu'à une centaine de générations pour leur réalisation.

Chaque génération d'image entraîne un décodage des données stockées. Ce décodage est généralement suivi d'un codage des nouvelles images obtenues.

Or, un des problèmes en codage numérique d'images est l'effet de la mise en cascade de plusieurs séries de codages et décodages. Les techniques de type classique ne permettent pas de conserver la même qualité d'image au cours des différentes générations. Les erreurs provenant des pertes d'information dues à ce type de codage se cumulent. Le rapport signal à bruit peut chuter de plusieurs décibels entre deux générations et conduire très rapidement à une image de mauvaise qualité. Généralement aucun traitement spécifique n'est appliqué pour éviter cette perte très gênante principalement en production.

Le but de la présente invention est de pallier les inconvénients précités.

La demande de brevet EP-A-0 509 576 divulgue l'exploitation d'histogrammes pour le calcul d'un pas de quantification utilisé lors d'un précédent codage. Du fait de l'existence de pics parasites dans les histogrammes et des arrondis pour les valeurs de coefficients à quantifier qui sont des valeurs entières, la fiabilité et précision obtenues lors du calcul du pas de quantification qui est un nombre réel ne sont pas garanties. L'invention permet de pallier ces inconvénients.

L'invention a pour objet un procédé et un dispositif de compression de données effectuant une quantification, lesquels déterminent le pas de quantification utilisé préalablement. Pour réaliser cet objet, on réalise un histogramme représentant le nombre d'occurrences des données à comprimer en fonction de leur valeur sur l'axe des abscisses; on détecte des maxima locaux dans l'histogramme; on mesure les écarts entre les positions de ces maxima; on calcule une moyenne initiale de ces écarts, si l'histogramme est cohérent; on effectue un filtrage des occurrences à partir d'une fenêtre glissante et on calcule les nouveaux écarts entre les positions relatives à l'occurrence maximum dans les fenêtres pour fournir le pas de quantification pour la quantification des données.

Grâce à ce procédé et dispositif, les pertes en rapport signal à bruit deviennent négligeables lors des codages des données et la qualité de l'image est maintenue au cours des différentes générations d'images.

Les caractéristiques et avantages de la présente invention ressortiront mieux de la description suivante, donnée à titre d'exemple et en référence aux figures annexées, où :

La figure 1 représente un codeur de données numériques connu de l'art antérieur.

La figure 2 représente un décodeur de données numériques connu de l'art antérieur.

La figure 3 représente des courbes d'occurrence des coefficients transformés en fonction de leur valeur.

La figure 4 représente un décodeur selon l'invention.

La figure 5 représente la courbe d'occurrence de coefficients transformés, non précédemment quantifiés, en fonction de leur valeur.

La figure 6 représente la courbe d'occurrence de coefficients transformés, précédemment quantifiés, en fonction de leur valeur.

La figure 7 représente un organigramme du procédé de calcul du pas de quantification.

La figure 8 représente les pertes dues à la multigénération avec ou sans le procédé selon l'invention.

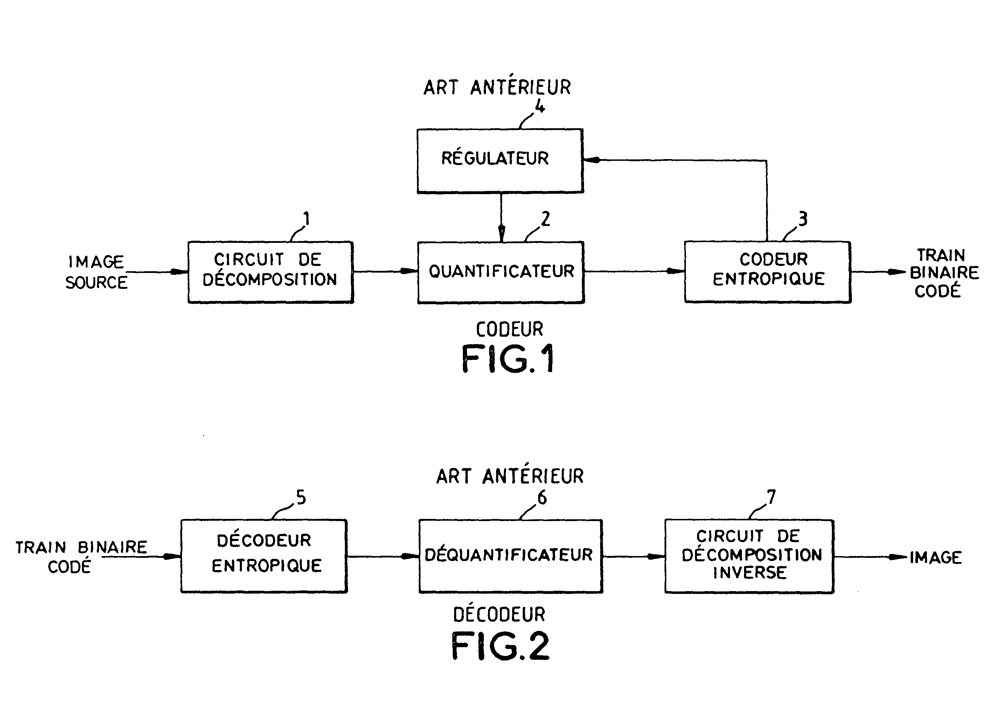

Le principe général d'un codeur de données vidéo numériques pour la compression de données par corrélation et quantification, connu de l'art antérieur, est représenté à la figure 1.

Un circuit de décomposition 1 reçoit sur son entrée les données numériques provenant de l'image source. Ce circuit réalise la décomposition de ces données c'est à dire la décorrélation de l'information pour en supprimer la redondance. Ainsi, le circuit de décomposition effectue par exemple une décomposition sous-bande ou une Transformation Cosinus Discrète.

Le signal décorrélé est alors transmis à un circuit de quantification ou quantificateur 2 qui à pour rôle de réduire la quantité d'informations à transmettre. Les signaux quantifiés sont ensuite transmis à un codeur entropique 3 qui associe des codes de longueur la plus grande au valeurs les moins probables. Il s'agit par exemple des codes de HUFFMANN, Arithmetic, B2, ...

Une première sortie de codeur fournit le train binaire codé qui constitue les informations comprimées à transmettre ou enregistrer et dans lequel sont incluses les informations concernant le pas de quantification utilisé et une deuxième sortie est reliée à un circuit de régulation ou régulateur 4. Le rôle de ce circuit est de réguler le débit en sortie du codeur de données de telle manière qu'il corresponde au débit disponible dans le canal ou débit de consigne. Pour ce faire, il est relié au quantificateur 2 et agit sur le pas de quantification en fonction des informations de débit recueillies.

Par exemple, le circuit de décomposition transforme les macroblocs d'une image composés de blocs d'image de 8 x 8 pixels, par Transformée Cosinus Discrète, en blocs de 8 x 8 coefficients, puis chaque coefficient, éventuellement pondéré, est quantifié avant qu'un Codage en Longueur Variable (CLV) réalise le codage entropique de ces coefficients se succédant selon un balayage en zigzag de la matrice des coefficients.

Les informations compressées sont ainsi stockées et transmises et leur exploitation nécessite de réaliser les opérations inverses de celles effectuées lors de la compression.

Un décodeur type, pour de telles opérations, est représenté à la figure 2.

Il est constitué, d'une manière connue, d'un décodeur entropique 5, relié à un circuit de quantification inverse ou déquantificateur 6, lui-même relié à un circuit de décomposition inverse 7 qui fournit alors les données utiles décompressées. Chacun de ces circuits réalise les opérations inverses du codeur de données, dans notre exemple un codage en longueur variable inverse, une quantification inverse, prenant en compte le pas de quantification reçu, une Transformée Cosinus Discrète inverse.

Ainsi, entre 2 générations d'images, les traitements appliqués sur les données sont dans l'ordre :
- une décomposition, une quantification, un codage entropique pour ce qui concerne le codage,
- un décodage entropique, une quantification inverse, une décomposition inverse pour le décodage.

Le codage entropique présente une réversibilité totale au niveau de décodeur : aucune information n'est perdue durant le processus de codage et de décodage. Il s'agit donc d'une application réversible qui, en conséquence n'intervient pas dans la perte d'information entre deux générations d'images.

Par contre, la décomposition et la quantification sont des techniques de codage non réversibles car sources d'approximations donc d'erreurs. Lors du processus de codage, une petite quantité d'informations est perdue et ne peut plus être récupérée au niveau de décodeur. Il s'agit, par exemple, des approximations liées à la précision de calcul et aux arrondis mathématiques lors de la transformation mathématique sur les séquences de données à l'entrée ou tout simplement de la quantification qui calcule un pas de quantification qui est généralement fonction des données statistiques de la source et qui est en fait une approximation.

Mais, fait encore plus gênant, ces pertes d'informations peuvent se cumuler lors de multigénération. En effet, les pas de quantification changent d'une génération d'images à l'autre, générations nécessaires, par exemple, pour le montage de séquences. Les pas de quantification sont généralement calculés à partir d'algorithmes qui prennent en compte les données statistiques de la séquence telles le débit des images précédant l'image courante à coder. Ainsi, le pas de quantification est souvent différent d'une compression à l'autre du fait des montages et évolue au cours des multigénérations. Selon le principe de quantification utilisé, la valeur quantifiée est soit une valeur arrondie au plus proche entier correspondant a une erreur maximum de q/2, soit une valeur tronquée à l'entier inférieur dont l'erreur maximum est le pas de quantification q.

Dans tous les cas, lors d'un nouveau codage de l'image, si le quantificateur a un pas différent de celui utilisé lors du précédent codage, et pour un coefficient donné, la valeur quantifiée du coefficient sera légèrement différente. La quantification est donc à l'origine du cumul des pertes au cours des multigénérations, ce cumul d'erreurs convergeant dans le premier cas (arrondis).

Le présent procédé est basé sur le fait que l'effet principal d'une quantification est de passer d'une distribution de valeurs uniforme à une distribution possédant des pics répartis suivant le pas utilisé et que d'autre part, si le pas est le même à chaque compression, alors le système n'est pas sensible au bruit résiduel, et les résultats sont quasiidentiques à chaque génération, les erreurs ne se cumulant pas.

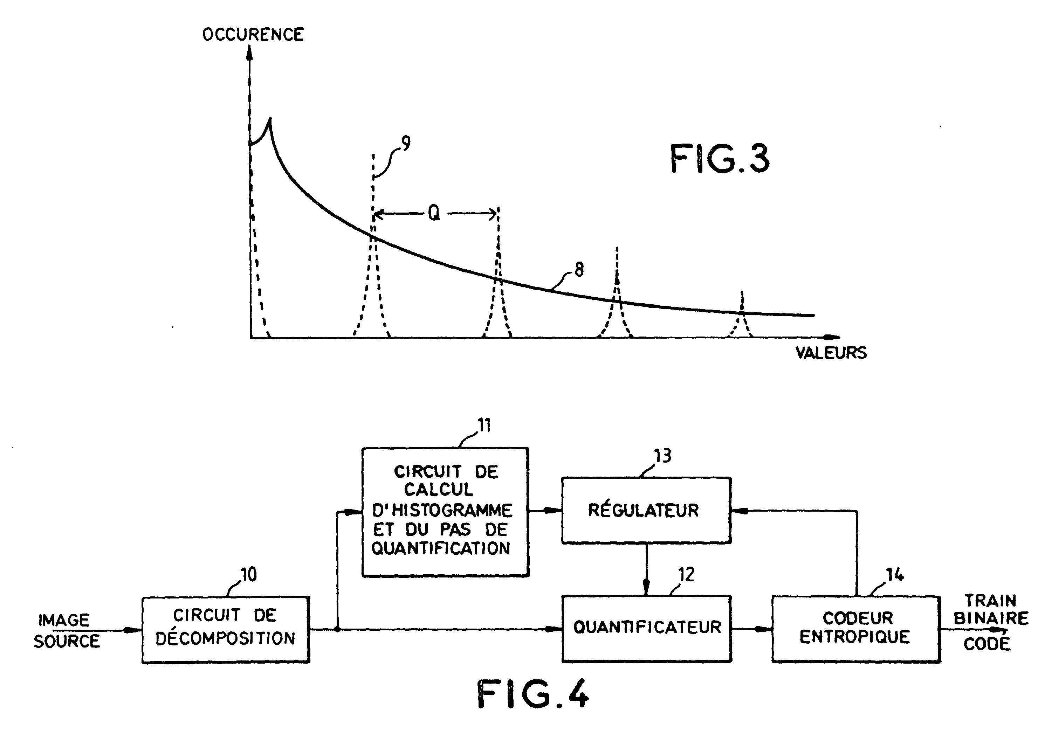

Sur la figure 3 sont tracées deux courbes 8 et 9 dans un repère orthonormé dont l'axe des abscisses représente les valeurs de coefficients et l'axe des ordonnées leur fréquence ou occurrence.

La courbe 8 en traits pleins concerne un exemple de coefficients obtenus par transformation (décomposition) d'une image source dont les données numériques n'ont jamais été comprimées. Il s'agit donc d'une répartition classique des fréquences dans une image vidéo: le nombre de coefficients TCD est une fonction décroissante de leur niveau. Les coefficients correspondant aux fréquences élevées sont majoritaires et de faible niveau, ceux correspondant aux fréquences plus basses sont en plus petit nombre et de plus fort niveau. La répartition de ces valeurs numériques est continue.

La courbe 9 en traits pointillés concerne les coefficients après une opération de quantification et déquantification utilisant un pas de quantification q. La répartition sur l'axe des abscisses n'est alors plus uniforme. Après une opération de déquantification, les seules valeurs de coefficients existantes sont des multiples des pas de quantification. En se plaçant après le circuit de décomposition, les valeurs effectivement obtenues et que trace la courbe 9 correspondent en fait à des pics espacés du pas q de quantification. Les arrondis effectués sur les valeurs lors du calcul mathématique (TCD, TCD Inverse) sont générateurs d'écarts que traduit l'élargissement vers la base du pic.

Si, par une technique quelconque il est possible de mesurer les intervalles entre pics, il est alors également possible de retrouver avec quel pas de quantification les valeurs ont été codées et donc de réaliser une déquantification avec le même pas que celui utilisé lors de la première quantification. On suppose bien sûr que l'information concernant le pas de quantification, après avoir été utilisée par le déquantificateur, est perdue, ce qui est généralement le cas.

C'est un procédé basé sur ce principe que met en oeuvre le dispositif de codage de la figure 4.

L'image source qui peut être l'image originale ou une image précédemment codée puis décodée est transmise à un circuit de décomposition 10 qui réalise une Transformation Cosinus Discrète comme indiqué ci-dessus dans la description de l'art antérieur. Les coefficients obtenus sont ensuite transmis en parallèle à un circuit de calcul d'histogramme et de pas de quantification 11 et à un quantificateur 12. Le rôle du premier circuit, appelé circuit de calcul d'histogramme par la suite, est de fournir une information sur la cohérence de l'histogramme et de calculer, à partir de cet histogramme, un pas de quantification comme explicité ci-après. Le circuit de calcul d'histogramme fournit donc une valeur de pas de quantification au quantificateur, à travers un circuit régulateur 13. Le quantificateur transmet les coefficients quantifiés à un codeur entropique 14 qui fournit le train binaire codé. Ce codeur entropique est également relié au régulateur 13 pour corriger le pas de quantification transmis par le circuit de calcul d'histogramme dans le cas où le débit des données transmises est trop important par rapport à la consigne, laissant supposer un calcul erroné de ce pas de quantification. Dans ce cas, le rôle du régulateur est d'adapter le flot de transmission au débit canal autorisé ou à la consigne.

Le principe de détection du pas de quantification est basé sur le calcul de la distribution des valeurs en sortie de circuit de décomposition, c'est à dire sur la détermination d'un histogramme. C'est le rôle du circuit de calcul d'histogramme 11.

L'histogramme est effectué sur un macrobloc, sur une ligne de macroblocs connue sous le nom Anglo-saxon de stripe ou même sur l'image complète selon l'algorithme utilisé pour la quantification. Il est effectué sur l'entité pour laquelle cet algorithme impose le même pas de quantification et il peut prendre en compte les blocs de chrominance, en plus de ceux de luminance, pour une meilleure précision.

Comme le montre la figure 1 ou 4, la quantification a lieu après la décomposition. Pour déterminer le pas utilisé préalablement, il faut donc se placer juste avant le quantificateur, et détecter ensuite les pics de valeur des coefficients, c'est-à-dire les valeurs les plus fréquentes, pour mesurer la moyenne des écarts entre eux. Cette dernière donne le pas de quantification utilisé précédemment, c'est-à-dire lors du codage précédant.

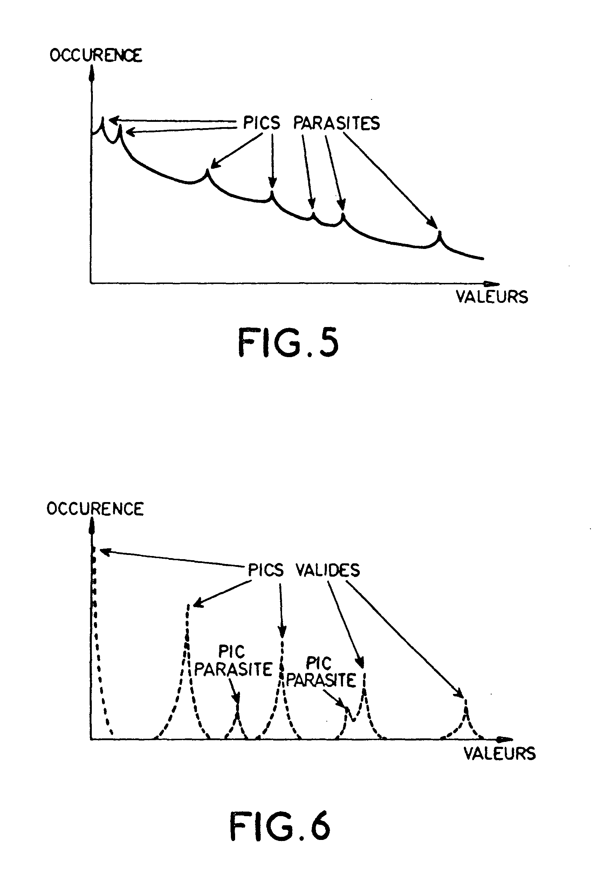

La figure 5 représente un tel histogramme pour une image source jamais codée et la figure 6 pour une image précédemment codée. Les axes définissent les mêmes références que ceux de la figure 3.

Bien que l'image n'ait jamais été codée, la figure 5 montre l'existence de pics. D'aspect général décroissant comme précédemment expliqué, cette courbe possède des pics d'occurrence correspondant à des fréquences plus présentes dans l'image que d'autres, donc intrinsèques à l'image décomposée fréquenciellement et donc aléatoires d'une image à l'autre. Il s'agit donc de pics parasites qui proviennent de la décomposition de l'image en coefficients de fréquence (ces pics existent également sur la courbe 8 de la figure 3 mais n'ont pas été représentés dans un but de simplification).

La figure 6 montre également l'existence de pics parasites à coté des pics "valides" liés au pas de quantification. Ces pics parasites ainsi que les bases élargies des pics valides sont dus aux erreurs d'arrondis effectués aussi bien lors de la décomposition inverse que lors de la décomposition lui succédant pour la génération du train binaire codé.

Il convient donc, pour la détermination du pas de quantification, de distinguer les distributions de données non codées (fig. 5), de celles de données déjà codées (fig. 6). Ensuite, comme il a été dit précédemment, il faut détecter les pics, et une difficulté consiste à trouver les moyens à mettre en oeuvre pour distinguer les pics valides des pics non valides.

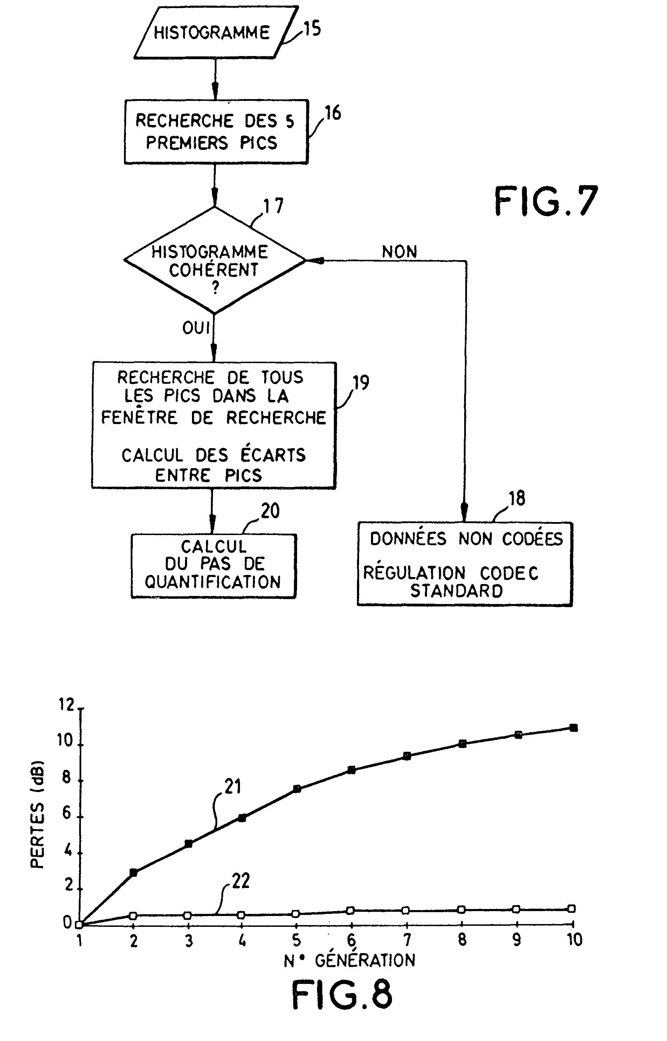

L'organigramme de la figure 7 détaille les différentes opérations mises en oeuvre par un circuit de calcul d'histogrammes 11 et permettant de résoudre ce problème.

La première étape 15 consiste en une détermination proprement dite de l'histogramme, c'est à dire de la fréquence des valeurs des données transmises par le circuit de décomposition 10. Après l'obtention d'une telle distribution, l'étape suivante 16 effectue une recherche des cinq premiers pics les plus grands qui sont les pics les plus significatifs. Pour détecter les pics, une solution consiste à trouver les maxima locaux, c'est à dire les pics à l'abscisse x dont la valeur est supérieure à la fois à la valeur précédente à l'abscisse x-1 et à la valeur suivante à l'abscisse x + 1. Ceci permet, dans le cas d'une distribution d'une image déjà codée, de ne pas prendre en compte les pics parasites.

L'étape 17 détermine si les écarts entre ces pics sont tous égaux, à une unité près, c'est à dire s'il existe une certaine régularité.

Si tel est le cas, l'histogramme est dit cohérent et la moyenne DELTA de ces écarts est calculée. La fourchette de recherche de ± 1 est due à l'arrondi du quantificateur. Les données à quantifier sont en effet sous forme de nombres entiers, un gain adéquat permettant d'assurer une précision suffisante pour qu'il en soit ainsi. Le pas de quantification q est généralement un nombre réel et les valeurs quantifiées, qui peuvent être réelles, sont donc arrondies lors de la déquantification pour donner des valeurs entières. En conséquence, les nombres entiers se trouvent, après quantification et déquantification (et accessoirement décomposition inverse et décomposition), répartis tous les multiples de q mais arrondis au plus proche entier.

Cette première phase, étapes 15, 16 et 17, consiste donc à déterminer si la distribution est du type continue ou non, c'est à dire si les données ont déjà été codées ou non . La phase qui suit est différente selon le résultat obtenu :

S'il s'agit d'une distribution discrète, ou , en d'autres termes, si l'histogramme est cohérent, on passe à l'étape 19. Lors de cette étape sont recherchés les pics valides pour une mesure de leur abscisse et le calcul précis du pas de quantification.

Une méthode pour ne prendre en compte que les pics valides consiste à rechercher, en partant de l'origine (où se trouve un maximum), le maximum suivant M1 dans une fenêtre de ± 1 centrée sur l'abscisse correspondant à la valeur arrondie de DELTA. On recherche ensuite un nouveau maximum dans la même fenêtre dont le centre est décalé de la valeur arrondie de DELTA par rapport à l'abscisse M1 de ce maximum. Et ainsi de suite. A partir des abscisses mesurés, les écarts et la moyenne des écarts est calculée à l'étape 20 pour retrouver le pas de quantification éventuellement réel. Le processus de régulation du système de codage utilise alors ce pas pour quantifier les données.

Si ce n'est pas le cas, l'histogramme est considéré continu et l'on passe à l'étape 18 où le pas de quantification est donné égal à 0. Dans ce cas, les données sont supposées ne pas avoir été déjà codées et la régulation est effectuée de manière classique, c'est à dire en calculant le pas de quantification en fonction de la complexité des images et du débit disponible.

Cette technique suppose le codage des mêmes informations d'une image à l'autre. Un premier problème se pose donc dans le cas d'un codage avec estimation de mouvement. Cette estimation de mouvement est généralement effectuée avant le circuit de décomposition de manière à ne coder que la différence entre un bloc courant et un bloc prédit à partir de cette estimation de mouvement. Les vecteurs mouvement correspondant à ce bloc prédit sont calculés à chaque compression et peuvent varier légèrement d'une compression à l'autre. L'information codée qui est l'erreur de prédiction n'est alors plus la même.

Pour s'affranchir de ce problème, deux solutions peuvent être adoptées :
- Soit posséder un bon estimateur de mouvement basé sur le mouvement réel et donc indépendant du fait que le codage d'une image peut en altérer le contenu.
- Soit ne fonctionner qu'en mode intra, c'est à dire sans utiliser de prédiction temporelle, donc d'estimation de mouvement.

Un deuxième problème concerne les éventuelles "non-linéarités" lors du codage. En effet, la technique précédemment décrite suppose un processus réversible entre le codage et le décodage. Or, par exemple dans le codage selon la norme ETSI, de l'Anglo-saxon European Telecommunication Standards Institute, 2 types de processus interviennent : le premier avec les matrices de pondération et le deuxième avec la loi non-linéaire dans le quantificateur. Il est alors nécessaire de compenser ces "non-linéarités".

Les matrices de pondération, aussi appelées matrices de visibilité, consistent à appliquer pour chaque valeur un coefficient de normalisation fonction de leur position. Pour compenser ces matrices, il faut appliquer aux valeurs de la distribution les coefficients de pondération avant de calculer la distribution, aux erreurs d'arrondis près. L'histogramme est donc effectué après décomposition et pondération sachant que la pondération inverse aura lieu, lors du décodage, après la déquantification.

De même, si une loi non-linéaire est utilisée dans le quantificateur, la loi inverse doit être appliquée au préalable si possible. Ces lois non-linéaires possèdent en général une partie linéaire, par exemple selon la norme ETSI, qui permet de s'affranchir de ce problème. Une autre solution consiste à ignorer ce problème, ce qui aura pour conséquence d'étaler un peu plus la base des pics, les lois non linéaires ne modifiant que légèrement les valeurs en règle générale. Le principe du procédé est ensuite appliqué en calculant la distribution des valeurs fournissant un histogramme du type celui de la figure 5 ou 6.

La figure 8 représente deux courbes 21 et 22 dans un repère ayant pour axe des abscisses le nombre de génération d'une séquence d'images vidéo et, pour axe des ordonnées, les pertes du signal à bruit cumulées et exprimées en décibels.

La courbe 21 concerne la génération d'image sans l'exploitation du procédé selon l'invention et avec une quantification par arrondi. Le rapport signal sur bruit diminue rapidement, de l'ordre de 3 dB dès la première génération d'images jusqu'à une dizaine de dB. Cela conduit à des images dont la qualité visuelle se dégrade très rapidement et de façon significative. Une quantification par troncature donnerait un résultat encore plus mauvais, l'absence de convergence du cumul d'erreur ne permettant pas de "plafonner" cette dégradation.

La courbe 22 est relative aux pertes signal à bruit lors de génération d'image avec l'exploitation du procédé selon l'invention. Celles-ci restent inférieures au dB et sont de l'ordre de 0,5 dB.

L'invention précédemment décrite concerne tous les systèmes de codage de données utilisant une quantification lors de ce codage et pour lesquels il faut conserver la même qualité d'information quel que soit le nombre de lectures et écritures. Il s'applique particulièrement aux codages d'images vidéo ou de données audio.

## Revendications

1. Procédé de compression de données réalisant un histogramme (15) des données à comprimer avant quantification de ces données, cet histogramme représentant le nombre d'occurrences des données en fonction de leur valeur sur l'axe des abscisses, **caractérisé en ce que** :
- des maxima locaux sont détectés (16) dans l'histogramme et les écarts entre les positions de ces maxima sont mesurés pour déterminer la cohérence de l'histogramme,
- si l'histogramme est cohérent, une moyenne DELTA de ces écarts est calculée,
- un filtrage des occurrences (19) est effectué à partir d'une fenêtre de filtrage glissante sur l'axe croissant des abscisses, la position initiale étant la distance DELTA par rapport à l'origine, la position suivante correspondant à un décalage DELTA par rapport à la position relative à la valeur d'occurrence maximum trouvée dans la précédente fenêtre,
- les écarts entre les positions relatives aux occurrences maximums dans les fenêtres sont calculés (19) pour être moyennés (19) afin de fournir le pas de quantification (20) pour la quantification des données.

2. Procédé selon la revendication 1, **caractérisé en ce que** les maxima locaux pris en compte sont ceux de plus forte amplitude.

3. Procédé selon l'une des revendication précédentes, **caractérisé en ce que** les données sont des données vidéo, **en ce que** la compression des données comprend une phase de décorrélation avant quantification et **en ce que** l'histogramme est effectué sur les données décorrelées.

4. Procédé selon la revendication 3, les données à comprimer ayant subi au moins une précédente compression/décompression comportant une étape de traitement non linéaire après la décorrélation et avant la quantification, **caractérisé en ce qu'**il réalise, après décorrélation et pour le tracé de l'histogramme, une linéarisation des données en effectuant les traitements inverses de ceux, non linéaires, appliqués en amont pour cette compression des données.

5. Procédé selon la revendication 4, **caractérisé en que** le traitement non linaire est une quantification, selon une loi non-linéaire, des valeurs obtenues après décorrélation.

6. Procédé selon la revendication 4, **caractérisé en que** le traitement non linaire est une pondération des valeurs obtenues après décorrélation.

7. Procédé selon la revendication 3, **caractérisé en ce que** la compression des données effectue un codage des données dans le seul mode de type intra.

8. Dispositif de compression de données comportant un circuit de transformation cosinus discrète inverse délivrant des coefficients (10), un circuit de quantification (12) de ces coefficients à partir d'un pas de quantification et un circuit de régulation (13) recevant ces coefficients quantifiés et agissant sur le pas de quantification, **caractérisé en ce qu'**il comprend :
- un circuit de calcul d'histogramme des coefficients pour fournir le nombre d'occurrences de ces coefficients en fonction de leur valeur,
- un circuit de calcul du pas de quantification à partir de cet histogramme (11) pour forcer ou pas, selon la cohérence de l'histogramme, le pas de quantification du circuit de quantification, le circuit de calcul d'histogramme et de pas de quantification (11) effectuant une moyenne DELTA des écarts entre des maxima locaux, un filtrage des occurrences de l'histogramme en fonction d'une fenêtre de filtrage glissante sur l'axe croissant des abscisses représentant les valeurs des coefficients, la position initiale étant la distance DELTA par rapport à l'origine, la position suivante correspondant à un décalage DELTA par rapport à la position relative à la valeur d'occurrence maximum trouvée dans la précédente fenêtre, les écarts entre les positions relatives aux occurrences maximums dans les fenêtres étant calculés (19) pour être moyennés (19) afin de fournir le pas de quantification (20) pour la quantification des données.

## Patentansprüche

1. Verfahren zur Komprimierung von Daten mit Bildung eines Histogramms (15) der zu komprimierenden Daten vor einer Quantisierung dieser Daten, wobei das Histogramm die Anzahl des Auftretens der Daten in Abhängigkeit von ihrem Wert auf der Abszissenachse darstellt,
**dadurch gekennzeichnet, daß**
- lokale Maxima in dem Histogramm detektiert (16) und die Abstände zwischen den Lagen dieser Maxima gemessen werden, um die Kohärenz des Histogramms zu bestimmen,
- dann, wenn das Histogramm kohärent ist, ein Mittelwert DELTA dieser Abweichungen berechnet wird,
- eine Filterung der Auftretensfälle (19) aus einem Filterungsfenster erfolgt, das auf der die Abszissen kreuzenden Achse gleitet, die anfängliche Lage der Abstand DELTA zu dem Ursprung ist, die folgende Lage einer Abweichung DELTA gegenüber der Lage relativ zu einem Wert eines maximalen Auftretens entspricht, der in dem vorangehenden Fenster gefunden wurde,
- die Abstände zwischen den Lagen bei den Maxima des Auftretens in den Fenstern berechnet (19) und gemittelt werden (19), um den Quantisierschritt (20) für die Quantisierung der Daten zu liefern.

2. Verfahren nach Anspruch 1, **dadurch gekennzeichnet, daß** die berücksichtigten örtlichen Maxima diejenigen mit der größten Amplitude sind.

3. Verfahren nach einem der vorangehenden Ansprüche, **dadurch gekennzeichnet, daß** die Daten Videodaten sind und daß die Komprimierung der Daten eine Phase der Dekorrelation vor der Quantisierung enthält und daß das Histogramm für die dekorrelierten Daten gebildet wird.

4. Verfahren nach Anspruch 3, bei dem die zu komprimierenden Daten die, wenigstens einer vorangehenden Komprimierung/Dekomprimierung unterliegen, einen Schritt einer nichtlinearen Verarbeitung nach der Dekorrelation und vor der Quantisierung enthalten, **dadurch gekennzeichnet, daß** es nach der Dekorrelation für die Bildung des Histogramms eine Linearisierung der Daten durchführt, indem Bearbeitungen erfolgen, die invers zu den nichtlinearen, vorher für diese Datenkomprimierung angewendeten Verarbeitungen sind.

5. Verfahren nach Anspruch 4, **dadurch gekennzeichnet, daß** die nichtlineare Verarbeitung eine Quantisierung gemäß einem nichtlinearen Gesetz der nach der Dekorrelation erhaltenen Werte ist.

6. Verfahren nach Anspruch 4, **dadurch gekennzeichnet, daß** die nichtlineare Verarbeitung eine Wichtung der nach der Dekorrelation erhaltenen Werte ist.

7. Verfahren nach Anspruch 3, **dadurch gekennzeichnet, daß** die Komprimierung der Daten eine Kodierung der Daten nur in dem Modus vom Typ Intra bewirkt.

8. Vorrichtung zur Komprimierung von Daten mit einer Schaltung zur inversen diskreten Cosinustransformation, die Koeffizienten (10) liefert, einer Schaltung (12) zur Quantisierung dieser Koeffizienten mit einem Quantisierschritt und einer Regelschaltung (13), die diese quantisierten Koeffizienten empfängt und mit dem Quantisierschritt arbeitet, **gekennzeichnet durch** folgende Merkmale:
- eine Schaltung zur Berechnung des Histogramms der Koeffizienten, um die Anzahl des Auftretens dieser Koeffizienten in Abhängigkeit von ihrem Wert zu liefern,
- eine Schaltung zur Berechnung des Quantisierschritts aus dem Histogramm (11), um die Kohärenz des Histogramms zu fördern oder nicht, wobei der Quantisierschritt der Quantisierschaltung, die Schaltung zur Berechnung des Histogramms und des Quantisierschritts (11) einen Mittelwert DELTA der Abstände zwischen den örtlichen Maxima bilden, eine Filterung des Auftretens des Histogramms in Abhängigkeit von einem Filterungsfenster, das auf der die die Werte der Koeffizienten darstellenden Abszissen kreuzenden Achse gleitet, wobei die anfängliche Lage der Abstand DELTA zu dem Ursprung ist, die folgende Lage einer Abweichung DELTA zu der Lage relativ zu dem Wert des in dem vorangehenden Fenster gefundenen maximalen Auftretens ist, und wobei die Abstände zwischen relativen Lagen zu den maximalen Auftreten in den Fenstern berechnet (19) und gemittelt werden (19), um den Quantisierschritt (20) für die Quantisierung der Daten zu liefern.

## Claims

1. Data compression process producing a histogram (15) of the data to be compressed before quantization of these data, such a histogram representing the number of occurrences of the data as a function of their value on the abscissa axis, **characterized in that** :
- local maximum values of the histogram are detected(16) and differences between the positions of these maxima are measured to determine the coherence of the histogram,
- if the histogram is coherent, an average DELTA of the differences is calculated,
- a filtering of the occurrences (19) is carried out from a filtering window sliding on the axis of increasing abscissas, the initial position being the difference DELTA relatively to the origin, the following position corresponding to a difference DELTA relatively to the position corresponding to the maximum occurrence value found in the previous window,
- the differences between the positions relative to the maximum occurrences in the windows are calculated (19) to be averaged (19) in order to provide the quantization step (20) for the quantization of the data.

2. Process according to claim 1, **characterized in that** the local maximum values taken into account are those of the greatest amplitude.

3. Process according to one of the preceding claims, **characterized in that** the data is video data, **in that** the compression of the data comprises a decorrelation phase before quantization and **in that** the histogram is effected on the decorrelated data.

4. Process according to claim 3, data to be compressed having undergone at least one previous compression/decompression comprising a step of non-linear processing after the decorrelation and before the quantization, **characterized in that** it effects, after decorrelation and for plotting the histogram, a linearisation of the data by carrying out the processings which are the inverse of those, non-linear, applied upstream for this compression of the data.

5. Process according to claim 4, **characterized in that** the non-linear processing is a quantization, according to a non-linear llaw, of the values obtained after decorrelation.

6. Process according to claim 4, **characterized in that** the non-linear processing is a weighting of the values obtained after decorrelation.

7. Process according to claim 3, **characterized in that** the data compression carries out a data coding in the only intra-type mode.

8. Data compression device comprising an Inverse Discrete Cosine Transform circuit providing coefficients (10), a coefficient quantization circuit (12) from a quantization step and a control circuit (13) receiving these quantified coefficients and acting on the quantization step, **characterized in that** it comprises :
- a histogram calculation circuit for the coefficients to provide the number of occurrences of these coefficients as a function of their value,
- a quantization step calculation circuit from this histogram (11) in order to force or not, according to the coherence of the histogram, the quantization step of the quantization circuit, the histogram circuit and quantization step circuit (11) calculating an average DELTA of the differences between local maxima, a filtering of the occurrences of the histogram from a filtering window sliding on the axis of increasing abscissas, the initial position being the difference DELTA relatively to the origin, the following position corresponding to the difference DELTA relatively to the position corresponding to the maximum occurrence value found in the previous window, the differences between the positions relative to the maximum occurrences in the windows being calculated (19) to be averaged (19) in order to provide the quantization step (20) for the quantization of the data.
